# EUROPEAN PATENT SPECIFICATION

(11) **EP 2 989 847 B1**
(45) Date of publication and mention of the grant of the patent: **04.12.2019**
(21) Application number: 13882822.3
(22) Date of filing: 25.04.2013
(51) Int. Cl.: H04L 29/06, H04W 16/26, H04W 12/02, H04W 12/00, H04L 12/46

(54) **METHOD AND ARRANGEMENT FOR PROTECTING A TRUSTED NETWORK**
VERFAHREN UND ANORDNUNG ZUM SCHUTZ EINES GESICHERTEN NETZWERKS
PROCÉDÉ ET AGENCEMENT DESTINÉS À PROTÉGER UN RÉSEAU DE CONFIANCE

(43) Date of publication of application: 02.03.2016
(73) Proprietor: SAAB AB, 581 88 Linköping (SE)
(72) Inventor: BAKMAN, Lau, DK-6310 Broager (DK); ROSENQUIST JOHANNSEN, Ken, DK-6400 Sønderborg (DK); STEG, Peter, DK-6340 Krusaa (DK)
(74) Representative: Zacco Sweden AB
(86) International application number: PCT/SE2013/050460
(87) International publication number: WO 2014/175797

(56) References cited:
- EP-A1- 2 493 207
- KR-A- 20030 014 803
- US-A1- 2002 138 635
- US-A1- 2003 005 331
- US-A1- 2003 223 395
- US-A1- 2010 296 444
- US-A1- 2012 198 519
- US-B1- 7 953 070

## Description

### TECHNICAL FIELD

The present invention relates to security arrangement in a first end terminal connected to a first network, for protecting against accidental breach of classified data to a second network and a method in a first end terminal connected to a first network, for protecting against accidental breach of classified data to a second network.

### TECHNICAL BACKGROUND

Military communication system must facilitate the chain of command and shall not constrain the ability of teams to implement tempo in carrying out their tasks. Tasks are often complex and require efficient coordination and cooperation between individuals, which in turn requires access to a variety of communication means and makes these available from a single end terminal. The military communication system provides a set of real time communication means such as voice, chat, or video segregated into subsystems with reference to the actual cryptographic equipment interfaces in use.

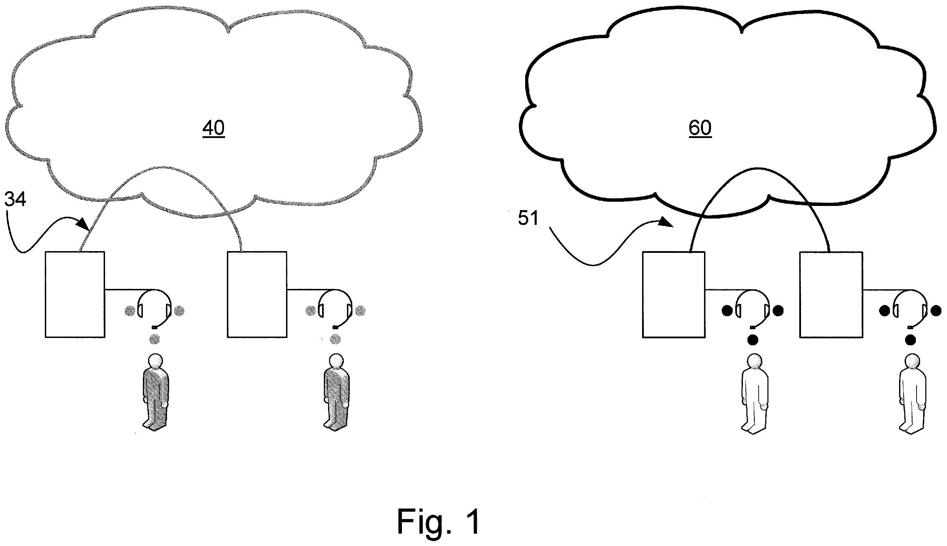

Fig. 1 illustrates networks 40, 60 with different security classification levels operating on the system level where the users on each network 40, 60 only can cooperate by use of e.g. voice at one security classification level. A first network 40 utilizes unencrypted classified real-time communication data through a communication channel 34 between nodes directly connected to the first network 40. A second network 60 utilizes unclassified communication 51 between nodes directly connected to the second network 60. The second network 60 has a lower security classification level than the first network 40. In this case the first network 40 represents a trusted network.

The system as illustrated in Fig. 1 does not commensurate with modern military needs which require users to be able to communicate with contacts on networks with lower security classification level as well. This is normally referred to as the general Security Policy for tactical voice communication.

US7953070B1 teaches a communication device that includes a voice communication module to effect packet-switched voice communications over an untrusted network; a secure communication module to create a secured pathway with a selected remote secure communication module; and a VPN topology client to contact a VPN topology server to receive VPN topology information that enables the secure communication module to create the secured pathway with the selected remote secure communication module. The VPN topology information includes IP addresses associated with remote secure communication modules, with each of the IP addresses having a corresponding range of node addresses serviced by the respective secure communication module.

WO2010/135163 A1 discloses a computer system executing a computer program coupled to multiple secure network domains configured in a multi-level security classification architecture. The computer program may selectively couple an electrical transducer to end terminals in different secure network domains. This solution requires one physical network per security classification level thus requiring a multitude of network equipment. Further it requires end terminals with one physical network adapter per security classification level thus limiting the number of security classification levels and scalability. Another problem is that it only supports voice. Further it require security gateway between network and end terminal.

There is therefore a need for an improved solution for secure communication in a multi-level security classification architecture which solution solves or at least mitigates at least one of the above mentioned problems.

### SUMMARY OF INVENTION

The invention relates to a security arrangement in a first end terminal, connected to a first network, for protecting against accidental breach of classified data to a second network. The security arrangement is configured to receive a request to transmit real-time communication data to a second end terminal in a second network and retrieve a security classification level for the second network. If the second network has a lower security classification level than the first network, the security arrangement is further configured to establish an inverse tunnel from the first end terminal to a trusted gateway interconnecting the first network and the second network. The security arrangement is further configured to receive real-time source data generated by a communication means. The security arrangement is yet further configured to receive media stream data comprising header data and payload data generated by a media application, wherein the real-time source data is used to generate the media stream data in the media application. Further, the security arrangement is configured to create real-time communication data by replacing the payload data in the media stream data with the real-time source data, the real-time communication data comprising header data from the media stream data and payload data from the real-time source data. Finally, the security arrangement is further configured to transmit the real-time communication data through the inverse tunnel.

The invention further relates to a method in a first end terminal, connected to a first network, for protecting against accidental breach of classified data to a second network. The method comprises the steps of receiving a request to transmit real-time communication data to a second end terminal in a second network and retrieving a security classification level for the second network. If the second network has a lower security classification level than the first network, the method comprises the further step of establishing an inverse tunnel from the first end terminal to a trusted gateway interconnecting the first network and the second network. The method further comprises the further step of receiving real-time source data generated by a communication means. The method yet further comprises the further step of receiving media stream data comprising header data and payload data generated by a media application, wherein the real-time source data is used to generate the media stream data in the media application. Further, the method further comprises the step of creating real-time communication data by replacing the payload data in the media stream data with the real-time source data, the real-time communication data comprising header data from the media stream data and payload data from the real-time source data. Finally, the method comprises the further step of transmitting the real-time communication data through the inverse tunnel.

An advantage with the present invention is that protection against accidental breach of classified data is provided. The inverse tunnel is protecting data that is outside of the tunnel from breaching into the inverse tunnel. Since the real-time communication data comprises payload data from the real-time source data, the security arrangement is much safer than previous solutions since the security arrangement uses data directly from the source. Thereby it is easier to prevent hostile software in the first end terminal or hostile data to be transmitted from the first end terminal.

Another advantage is that situations with multi-level security classification networks can be handled and the number of security classification levels is scalable. A method/system scalable in terms of number of security classification levels is thereby provided.

A further advantage is that separation of real-time communication data that cannot tolerate deep packet inspection due to its low delay tolerance is supported.

Another advantage is that it is decoupled from real-time software application, OS and hardware layer and network adapters.

A further advantage is that no dedicated hardware unit is required.

Yet a further advantage is that it operates in an application environment of the first end terminal. The application environment is also referred to as the user space of operating systems.

A further advantage is that the security arrangement provides possibilities to use either multiple virtual LAN ports or multiple physical network adapters. Further, only one physical network adapter is needed instead of one physical network adapter per security classification level since the security arrangement is decoupled from the hardware layer of the computer architecture and therefore can use VLANs. With the security arrangement is still possible to use a plurality of physical network adapters. The number of connected end terminals can be expanded beyond the number of available physical network adapters, without altering the hardware configuration. This leads to reduced cost of network equipment and wiring.

Another advantage is that the invention provides possibilities of integrated operations at one terminal in multi-level security classification situations.

The present invention also relates to a computer readable storage medium comprising computer software which when run in the end terminal causes the end terminal to perform the method according to any of the previous described exemplary embodiments. The invention is defined by the appended claims.

### BRIEF DESCRIPTION OF FIGURES

The invention will be further described with reference to the accompanying drawings.
Fig. 1 shows an overview of a communication system according to prior art.
Fig. 2 shows a schematic view of a security arrangement in a first end terminal according to an exemplary embodiment of the invention.
Fig. 3 shows a schematic view of a security arrangement in a first end terminal according to a further exemplary embodiment of the invention.
Fig. 4 shows an overview of an example of a communication system comprising two networks of different security classification levels wherein the present invention can be used.
Fig. 5 shows an overview of an example of a communication system comprising three networks of different security classification levels wherein the present invention can be used.
Fig. 6 shows a flow diagram of a method according to an exemplary embodiment of the invention.

### DETAILED DESCRIPTIONS OF INVENTION

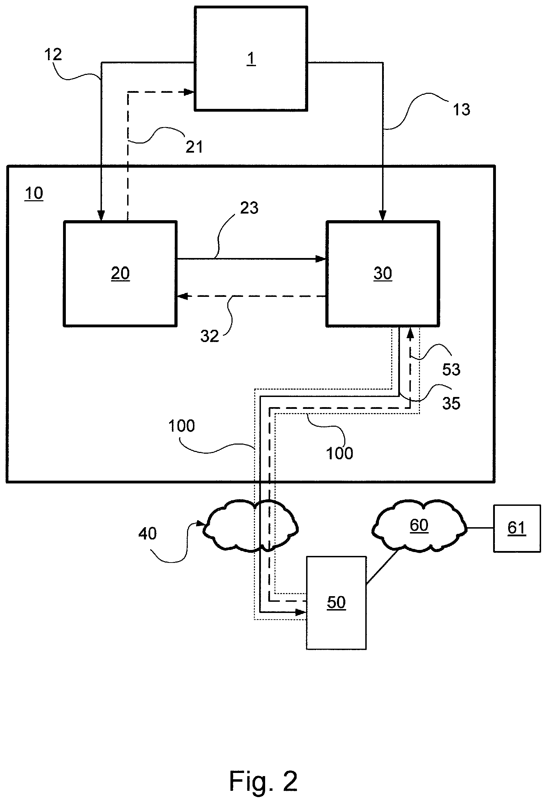

Fig. 2 shows a schematic view of a security arrangement 30 in a first end terminal 10, connected to a first network 40 according to an exemplary embodiment of the invention. Classified data is residing in the first end terminal 10 and the first network 40. The security arrangement 30 protects against accidental breach of classified data to a second network 60. In this case the first network 40 represents a trusted network. The first network 40 has a higher security classification level than the second network 60. A communication means 1 transmits real-time source data 12 to a media application 20. The media application 20 is thus operable to receive real-time source data 12 from the communications means 1. The real-time source data 12 may be audio data, text data or video data. The real-time source data 12 is not limited to only these types but can also be other types of data, like e.g. command data. Further the media application 20 is operable to provide media stream data 23 comprising header data and payload data. The security arrangement 30 receives the media stream data 23 from the media application 20. The communication means 1 can be a headset and a microphone. Further, the communication means 1 can be a camera or a monitor. The camera or monitor can be used in a videoconference. Yet further, the communication means 1 can be a keyboard. The keyboard can be used for instant messages. Further, the communication means 1 may be a unit, such as a sensor unit e.g. Identification Friend Foe (IFF), Electronic Support Measure (ESM) or Sound Navigation and Ranging (SONAR) that provide audible information that is used for monitoring and warn operators in a tactical environment.

The second network 60 may have a lower security classification level than the first network 40. According to an exemplary embodiment of the invention, the security arrangement 30 enables transmission of real-time communication data 35 to a second end terminal 61 in the second network 60 of a lower security classification level without leaking classified data from the media application 20, the first end terminal 10, and the first network 40 to the second network 60.

According to an exemplary embodiment of the invention, the security arrangement 30 is configured to receive a request for real-time communication data 35 to the second end terminal 61 in the second network 60. Further, the security arrangement 30 is configured to retrieve a security classification level for the second network 60. If the second network 60 has a lower security classification level than the first network 40, the security arrangement 30 is further configured to establish an inverse tunnel 100 from the first end terminal 10 to a trusted gateway 50 interconnecting the first network 40 and the second network 60. Further, the security arrangement 30 is configured to receive real-time source data 13 generated by the communication means 1. The real-time source data 13 and the real-time source data 12 are generated by the same communication means 1. The real-time source data 13 may be audio data, text data or video data. The real-time source data 13 is not limited to only these types but can also be other types of data, like e.g. command data. Yet further, the security arrangement 30 is configured to receive media stream data 23 comprising header data and payload data generated by the media application 20. The real-time source data 12 is used to generate the media stream data 23 in the media application 20. Yet further, the security arrangement 30 is configured to create real-time communication data 35 by replacing the payload data in the media stream data 23 with the real-time source data 13. Thereby the real-time communication data 35 comprises header data from the media stream data 23 and payload data from the real-time source data 12. The real-time communication data 35 may be audio data, text data or video data. The real-time communication data 35 is not limited to only these types but can also be other types of data, like e.g. command data. The security arrangement 30 is configured to transmit the real-time communication data 35 through the inverse tunnel 100. Since the real-time communication data 35 comprises payload data from the real-time source data 13, the security arrangement 30 is secure, scalable, and more flexible than previous solutions. Thus, the real-time source data 13 from the communication means 1 is comprised in the real-time communication data 35 without being modified. Thereby it is easier to prevent malicious software within the media application 20 to compromise classified data in the first end terminal 10 or classified data being transmitted from the first end terminal 10. The security arrangement 30 protects classified data from leaking to the second network 60.

According to a further exemplary embodiment of the invention, the security arrangement 30 is configured to receive incoming real-time communication data 53 through the inverse tunnel 100 from the second end terminal 61 in the second network 60.

Creation and destruction of the inverse tunnel 100 is decided during session signalling. During the session signalling a media description between end terminals is negotiated. Session signalling is the process of initiating a call and negotiating means of communication between end terminals. The negotiated means are described in the media description. The inverse tunnel 100 is established for a limited time between the trusted gateway 50 and the security arrangement 30 in the end terminal 10.The inverse tunnel 100 is established in the same way as a normal tunnel. The inverse tunnel 100 is protecting classified data that is outside of the tunnel from leaking to the second network 60. Any tunneling protocol that can be established in the application layer may be used. The inverse tunnel 100 protects the first network 40 from accidental breach of classified data into to the inverse tunnel 100. An advantage with establishing the inverse tunnel 100 is that protection against accidental breach of classified data within the first network 40 is provided. It is an advantage that the inverse tunneling allows real-time communication without applying deep packet inspection. Deep packet inspection cannot be tolerated due to high time delay caused by the deep packet inspection. Another advantage is that the security arrangement 30 is decoupled from the media application 20, operating system, hardware layer and network adapters.

According to a further exemplary embodiment of the invention, the security arrangement 30 may decrypt and/or modify the incoming real-time communication data 53. The security arrangement 30 forwards real-time data 32 to the media application 20. The real-time data 32 may be the original incoming real-time communication data 53 or may be modified from the original incoming real-time communication data 53. The media application 20 converts the real-time data 32 to incoming source data 21 which has a format that the communication means 1 can interpret. The incoming source data 21 may be voice data or other types of communication data. Further the incoming source data 21 may be text data or video data transmitted to the communication means 1.

According to a further exemplary embodiment of the invention, the security arrangement 30 is configured to limit bandwidth of the media stream data 23 to a negotiated data rate according to the negotiated media description which is part of a signalling protocol. The signalling protocol is used for session signalling. The signalling protocol may be a session initiation protocol (SIP). The media description is negotiated by the first end terminal 10 and the second end terminal 61. The negotiated media description depends on which protocols and codecs the first end terminal 10 and the second end terminal 61 support.

According to yet a further exemplary embodiment of the invention, the security arrangement 30 is further configured to perform a sanity check to verify the header of the media stream data 23 against the negotiated media description. The sanity check is performed according to specification of the negotiated media description which is part of the signalling protocol. If the media stream data 23 fails the sanity check, the media stream data 23 is blocked by the security arrangement 30.

According to a further exemplary embodiment of the invention, the media application 20 negotiates a real-time protocol and packs the real-time source data 12 according to the real-time protocol in order to provide media stream data 23. The real-time protocol is described in the negotiated media description which is part of the signalling protocol. The negotiation depends on which protocols and codecs each end terminal supports.

According to another exemplary embodiment of the invention, the security arrangement 30 is implemented in the application layer of the first end terminal 10. The term "application layer" refers to the term as defined in the Internet Protocol Suite (RFC1122) and/or above transport layer as defined in the OSI model (ISO/IEC 7498-1). An advantage is that no dedicated hardware unit is required for the security arrangement. The application layer is also referred to as a user space of the operating system.

According to yet another exemplary embodiment of the invention, the media application 20 is operable in the application layer. The media application 20 utilizes the media description as configuration data regarding e.g. protocols and codecs in use, such as Real-time Transport Protocol (RTP), Remote Procedure Call (RPC) or Media Gateway Control Protocol (MGCP) The media application may be a third party application.

According to a further exemplary embodiment of the invention, the security arrangement 30 is further configured to perform an integrity check of the security of software used for the security arrangement 30 and disable all transmission of real-time communication data 35 from the first end terminal 10 on a negative outcome of the integrity check.

According to an exemplary embodiment of the invention, the security classification level of the second network 60 is retrieved by comparing the address of the second end terminal 61 with defined security level address spaces. The address space is transmitted to and stored in the security arrangement 30 in the first end terminal 10 when the first network 40 is interconnected with the second network 60 using the trusted gateway 50. The address space is defined as a static configured definition of address space that is related to a specific classification level. The definition of the security level address space is performed during set up of the system.

According to another exemplary embodiment of the invention, the security arrangement 30 is configured to encrypt the media stream data 23 using an encryption algorithm (e.g. AES) and a key combination that is unique for each security classification level. The encrypted data is transmitted as real-time communication data 35 to the trusted gateway 50.

According to yet another exemplary embodiment of the invention, the security arrangement 30 is configured to decrypt the incoming real-time communication data 53 using an encryption algorithm (e.g. AES) and a key combination that is unique for each security classification level. The decrypted data is transmitted as real-time data 32 to the media application 20.

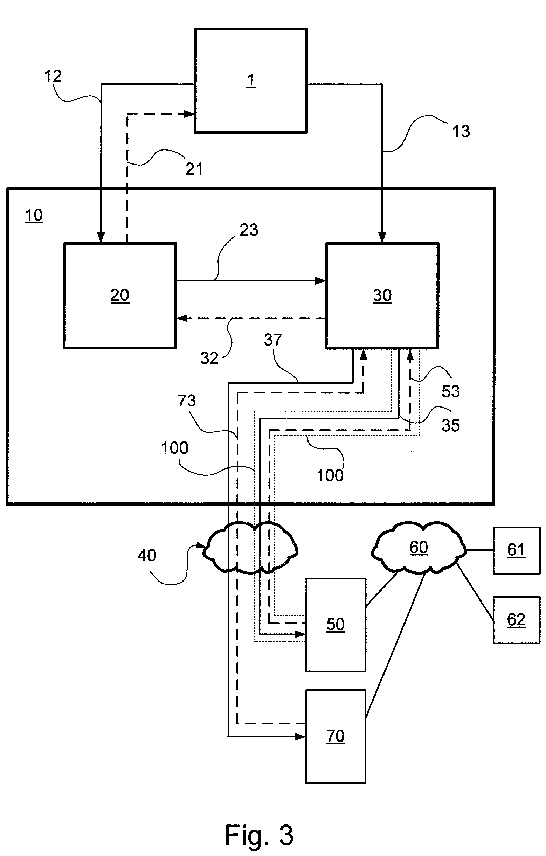

Fig. 3 shows a schematic view of the security arrangement 30 in the first end terminal 10 according to a further exemplary embodiment of the invention. The security arrangement 30 in Fig. 3 incorporates all the structural features of the security arrangement 30 of Fig. 2. Further, the security arrangement 30 in support to the media application 20 is configured to support secure encryption. Real-time communication data 35 (non-secure) is transmitted via the trusted gateway 50 to a radio unit 62 in the second network 60. The radio unit 62 may be another end terminal. It can be an IP radio unit or a legacy radio unit connected with an IP-adapter (IP gateway). Together the radio unit 62 and the second end terminal 61 may be used by an operator to communicate over radio. Upon agreement the transmissions are changed into secure encryption by transmitting real-time communication data 37 via an encryption unit 70 to the radio unit 62 in the second network 60. The encryption unit 70 is configured to encrypt the real-time communication data 37 in such a way that it is maintaining the confidentiality of the real-time communication data 37 during an interception attack. Yet further, the security arrangement 30 is configured to receive incoming real-time communication data 73 via the encryption unit 70. The security arrangement 30 may modify the incoming real-time communication data 73. The security arrangement 30 may forward the modified real-time communication data as real-time data 32 to the media application 20. The media application 20 converts the real-time data 32 to incoming source data 21 which has a format that the communication means 1 can interpret.

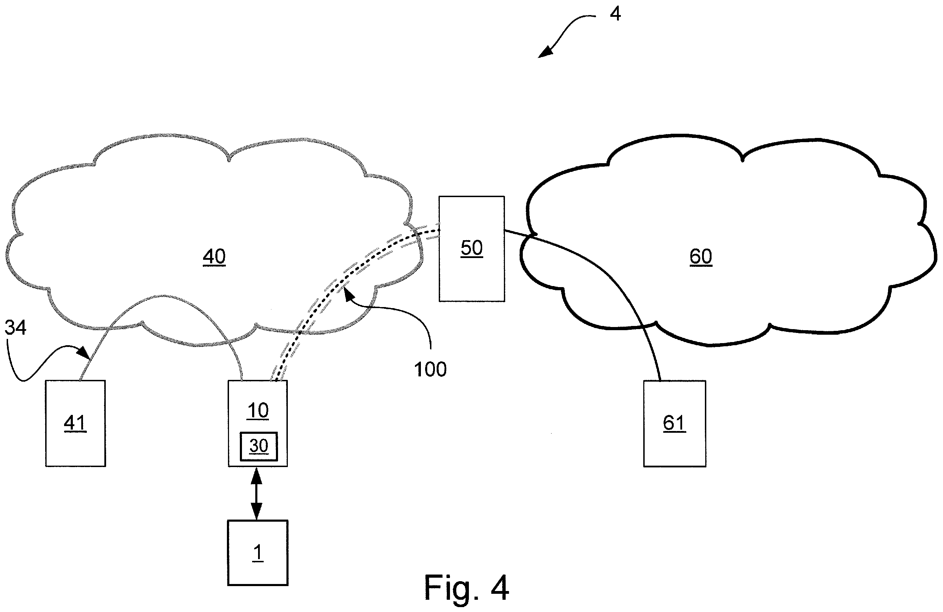

Fig. 4 shows an overview of an example of a communication system 4 comprising two networks 40, 60 of different security classification levels, wherein the present invention can be used. The communication means 1 is connected to the first end terminal 10. The first end terminal 10 is connected to the first network 40. The first end terminal 10 may have an on-going real-time communication channel 34 to at least another end terminal 41 which is connected to the first network 40. The communication channel 34 may comprise unencrypted classified real-time communication data. The second end terminal 61 is connected to the second network 60. The first network 40 and the network 60 are interconnected by means of the trusted gateway 50. The second network 60 has a lower security classification level than the first network 40. The security arrangement 30 transmits real-time communication data 35 to the second end terminal 61 in the second network 60 of a lower security classification level without compromising safety. The security arrangement 30 protects against accidental breach of classified data to end terminals in the second network 60 of a lower security classification level. The communication channel 34 within the first network 40 does not leak into the inverse tunnel 100. Accordingly no hardware for security between the first network 40 and the first end terminal 10 is needed since the security arrangement 30 is provided in the first end terminal 10.

According to another exemplary embodiment of the invention, the security arrangement 30 is configured to establish the real-time communication channel 34 with the other end terminal 41 of same security classification level connected inside the first network 40.

According to a yet further exemplary embodiment of the invention, the security arrangement 30 is configured to generate a warning tone if real-time communication data 35 is sent to the second end terminal 61, since the second end terminal 61 is connected to the second network 60 which has a lower security classification level than the first network 40.

According to a further exemplary embodiment of the invention, the security arrangement 30 is further configured to silence reception of incoming higher security level classified real-time communication data when the first end terminal 10 transmits lower security level classified real-time communication data 35. The incoming higher security level classified real-time communication data is from the first network 40. The lower security level classified real-time communication data 35 is transmitted to the second network 60

Silence reception of incoming higher level classified real-time communication data is performed to avoid acoustic and/or visual feedback of incoming higher level classified real-time communication data to lower classified real-time communication data 35 in the communication means 1.

According to a further exemplary embodiment of the invention, the security arrangement 30 is further configured to silence transmission of outgoing lower security level classified real-time communication data 35 when the first end terminal 10 receives higher security level classified real-time communication data. The lower security level classified real-time communication data 35 is transmitted to the second network 60. The incoming higher security level classified real-time communication data is from the first network 40.

Silence transmission of outgoing lower classified real-time communication data 35 is performed to avoid acoustic and/or visual feedback of incoming higher level classified real-time communication data to lower classified real-time communication data 35 in the communication means 1.

A logical implementation of the security arrangement 30 instead of a physical implementation, operating on a logical level has the advantage of simplifying the installation and allowing an existing installation for easy expansion to more than two security classification levels (multi-level security classification situations).

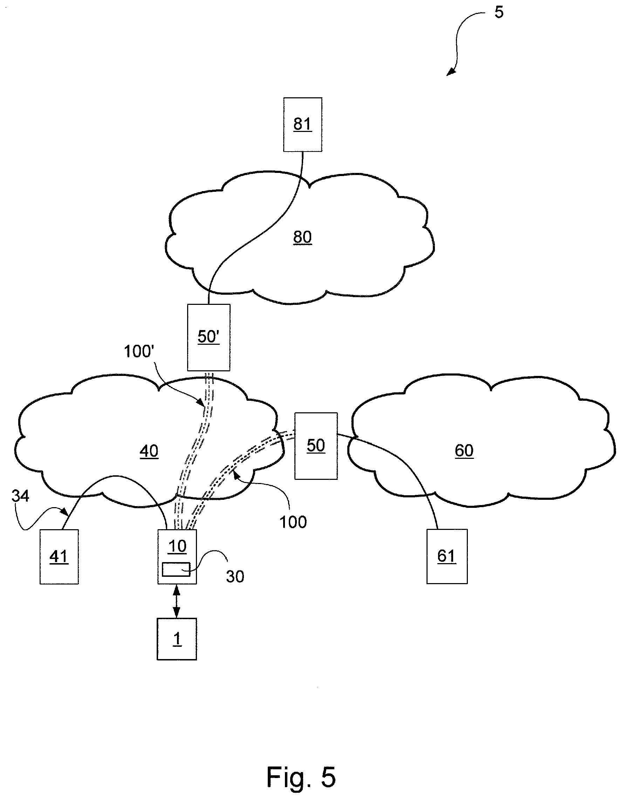

Fig. 5 shows an overview of an example of a communication system 5 comprising three networks 40, 60, 80 of different security classification levels, wherein the present invention can be used.

The communication means 1 is connected to the first end terminal 10. The first end terminal 10 is connected to the first network 40. The first end terminal 10 may have an on-going real-time communication channel 34 to at least the other end terminal 41 which is connected to the first network 40. The communication channel 34 may comprise unencrypted classified real-time communication data. The second end terminal 61 is connected to the second network 60. The first network 40 and the second network 60 are interconnected by means of the trusted gateway 50. The second network 60 has a lower security classification level than the first network 40. The security arrangement 30 transmits real-time communication data via the trusted gateway 50 to the second end terminal 61 in the second network 60 of a lower security classification level without compromising classified data.

A third end terminal 81 is connected to a third network 80. The first network 40 and the third network 80 are interconnected by means of a trusted gateway 50'. The third network 80 has a lower security classification level than the first network 40. The security arrangement 30 transmits real-time communication data via the trusted gateway 50' to the third end terminal 81 in the third network 80 of a lower security classification level without compromising classified data. The second network 40 and the third network 80 may have different security classification levels.

According to another exemplary embodiment of the invention, the security arrangement 30 is configured to establish a plurality of inverse tunnels 100, 100' to a plurality of trusted gateways 50, 50' each interconnected between the first network 40 and the second network 60 or the third network 80 having a lower security classification level than the first network 40. If the security arrangement 30 has established a plurality of inverse tunnels 100, 100', the security arrangement 30 is able to switch between the plurality of inverse tunnels 100, 100'. An advantage is that it is possible for the first end terminal 10 to switch which end terminal that is receiving the real-time communication data 35.

The communication system 5 is scalable in terms of number of security classification levels networks. An advantage is that the communication system 5 with several networks with different security classification levels can be handled. Another advantage is that the invention provides possibilities of integrated operations in the end terminal 10 in communication systems with several networks with different security classification levels.

A further advantage is that the security arrangement 30 provides possibilities to use either multiple virtual LAN ports or multiple physical network adapters. Further, only one physical network adapter is needed instead of one physical network adapter per security classification level since the security arrangement 30 is decoupled from the hardware layer of the computer architecture and therefore can use VLANs. With the security arrangement 30 it is still possible to use a plurality of physical network adapters. The number of interconnected networks each classified to a different security classifications level can be expanded beyond the number of available physical network adapters, without altering the hardware configuration. This leads to reduced cost of network equipment and wiring.

According to yet another exemplary embodiment of the invention, the security arrangement 30 is configured to allow incoming real-time communication data 53 from several security classification levels simultaneously without compromising the confidentiality of own and received classified data. This is handled by the media application 20. Simultaneously the security arrangement 30 is configured to only allow transmission of real-time communication data 35 into one security classification level at a time. An advantage is that the security arrangement 30 provides the capability to listen into or monitor several security classification levels simultaneously without compromising the confidentiality of own and received classified data.

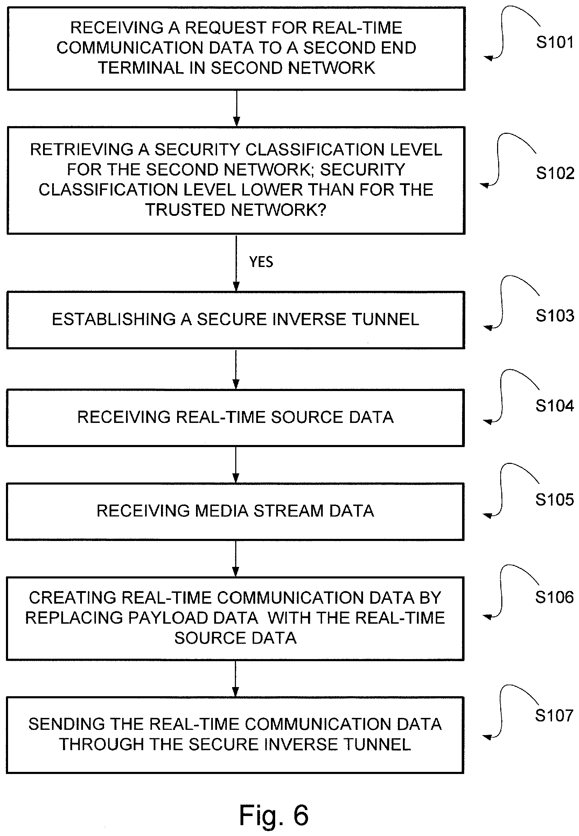

Referring to Fig. 6 the invention also relates to a method in the first end terminal 10, connected to the first network 40, for protecting against accidental breach of classified data to the second network 60 according to previously described exemplary embodiments. The method comprises a step of receiving S101 a request for real-time communication data 35 to the second end terminal 61 in the second network 60. Further the method comprises a step of retrieving S102 a security classification level for the second network 60. If the second network 60 has a lower security classification level than the first network 40 the method comprises further steps. Firstly, the method comprises a further step of establishing S103 the inverse tunnel 100 from the first end terminal 10 to the trusted gateway 50 interconnecting the first network 40 and the second network 60. Further, the method comprises a yet further step of receiving S104 real-time source data 12 generated by the communication means 1. Yet further, the method comprises a further step of receiving S105 media stream data 23 comprising header data and payload data generated by the media application 20, wherein the real-time source data 12 is used to generate the media stream data 23 in the media application 20. The method comprises a yet further step of creating S106 real-time communication data 35 by replacing the payload data in the media stream data 23 with the real-time source data 13, the real-time communication data 35 comprising header data from the media stream data 23 and payload data from the real-time source data 13. The method comprises a further step of transmitting S107 the real-time communication data 35 through the inverse tunnel 100.

In another exemplary embodiment of the method in the first end terminal 10 according to the present invention, the step of creating S106 real-time communication data 35 is preceded by the step of limiting bandwidth of the media stream data 23 to the negotiated data rate, according to previously described embodiments.

In a further exemplary embodiment of the method in the first end terminal 10, according to previously described embodiments, the step of creating S106 real-time communication data 35 is preceded by the step of performing a sanity check to verify the header of the media stream data 23 against the negotiated media description. If the media stream data 23 fails the sanity check, the media stream data 23 is blocked, according to previously described embodiments.

In yet further exemplary embodiment of the method in the first end terminal 10, if first end terminal 10 has established a plurality of inverse tunnels 100, 100', the method comprises a further step of switching between the plurality of inverse tunnels 100, 100', according to previously described embodiments.

In another exemplary embodiment of the method in the first end terminal 10, if the first end terminal 10 has established a plurality of inverse tunnels 100, 100', only transmission of real-time communication data 35 into one security classification level at a time is allowed, according to previously described embodiments.

In yet further exemplary embodiment of the method in the first end terminal 10, the method comprises a further step of allowing incoming real-time communication data 53 from several security classification levels simultaneously without compromising confidentiality of own and received classified data, according to previously described embodiments.

In a further exemplary embodiment of the method in the first end terminal 10, the real-time communication data 35 is audio data, text data or video data, according to previously described embodiments.

In a yet further exemplary embodiment of the method in the first end terminal 10, the method comprises the step of silencing reception of incoming higher security level classified real-time communication data when the first end terminal 10 transmits lower security level classified real-time communication data 35, according to previously described embodiments.

In a yet further exemplary embodiment of the method in the first end terminal 10, the method comprises the step of silencing transmission of outgoing lower security level classified real-time communication data 35 when the first end terminal 10 receives higher security level classified real-time communication data, according to previously described embodiments.

In another exemplary embodiment of the method in the first end terminal 10, the method is implemented in the application layer of the first end terminal 10.

In a further exemplary embodiment of the method in the first end terminal 10, according to previously described embodiments, the method further comprises the step of performing an integrity check of the security of software used for the method. Further, the method comprises the step of disabling transmissions of real-time communication data 35 from the first end terminal 10 on a negative outcome of the integrity check.

In another exemplary embodiment of the method in the first end terminal 10, the method further comprises the step of switching into encrypted transmission by transmitting real-time communication data 37 via the encryption unit 70 to the radio unit 62 in the second network 60, according to previously described embodiments.

The present invention also relates to a computer readable storage medium comprising computer software which when run in the end terminal 10 causes the end terminal 10 to perform the method according to any of the previous described exemplary embodiments.

The invention is not limited to the specific flow diagram presented, but includes all variations within the scope of the present claims. The internal sequence of the steps for arriving at transmitting the real-time communication data through the inverse tunnel can of course be varied.

The term "communication means" is broadly defined and may act both as a source and a receiver of data. The "communication means" may be a program or unit which is interacting with another data interacting member.

As will be realised, the invention is capable of modification in various obvious respects, all without departing from the scope of the appended claims. Accordingly, the drawings and the description thereto are to be regarded as illustrative in nature, and not restrictive.

## Claims

1. Communication system comprising a first end terminal (10), a communication means (1), a security arrangement (30), a media application (20) and wherein the security arrangement (30) is in the first end terminal (10), connected to a first network (40), for protecting against accidental breach of classified data to a second network (60), wherein the first network (40) represents a trusted network having a higher security classification level than the second network (60), said security arrangement (30) is configured to:
- receive a request to transmit real-time communication data (35) to a second end terminal (61) in said second network (60);
- retrieve a security classification level for said second network (60);
if said second network (60) has a lower security classification level than said first network (40), wherein said first network (40) represents a trusted network, said security arrangement (30) is further configured to:
- establish an inverse tunnel (100) from said first end terminal (10) to a trusted gateway (50) interconnecting said first network (40) and said second network (60), wherein said inverse tunnel (100) is protecting data that is outside of the tunnel (100) from breaching into the inverse tunnel (100), so as to protect classified data that is outside of the tunnel from leaking to the second network (60);
- receive real-time source data (13) generated by the communication means (1);
- receive media stream data (23) comprising header data and payload data generated by the media application (20), wherein real-time source data (12) received from the communication means (1) is used to generate said media stream data (23) in said media application (20);
- create real-time communication data (35) by replacing the payload data in said media stream data (23) with said real-time source data (13), said real-time communication data (35) comprising header data from said media stream data (23) and payload data from said real-time source data (13);
- transmit said real-time communication data (35) through said inverse tunnel (100).

2. Communication system according to claim 1, wherein said security arrangement (30) is further configured to limit bandwidth of said media stream data (23) to a negotiated data rate.

3. Communication system according to any of claim 1-2, wherein said security arrangement (30) is further configured to perform a sanity check to verify the header of said media stream data (23) against a negotiated media description; and if said media stream data (23) fails the sanity check, block said media stream data (23).

4. Communication system according to any preceding claim, wherein if said security arrangement (30) has established a plurality of inverse tunnels (100, 100'), said security arrangement (30) is further configured to switch between said plurality of inverse tunnels (100, 100').

5. Communication system according to any preceding claim, wherein if said security arrangement (30) has established a plurality of inverse tunnels (100, 100'), said security arrangement (30) is further configured to only allow transmission of said real-time communication data (35) into one security classification level at a time.

6. Communication system according to any preceding claim, wherein said security arrangement (30) is configured to allow incoming real-time communication data (53) from several security classification levels simultaneously without compromising confidentiality of own and received classified data.

7. Communication system according to any preceding claim, wherein said real-time communication data (35) is audio data, text data or video data.

8. Communication system according any preceding claim, wherein said security arrangement (30) is further configured to:
- silence reception of incoming higher security level classified real-time communication data when said first end terminal (10) transmits lower security level classified real-time communication data (35).

9. Communication system according any preceding claim, wherein said security arrangement (30) is further configured to:
- silence transmission of outgoing lower security level classified real-time communication data (35) when said first end terminal (10) receives higher security level classified real-time communication data.

10. Communication system according to any preceding claim, wherein said security arrangement (30) is further configured to:
- perform an integrity check of security of software used for said security arrangement (30);
- disable all transmission of said real-time communication data (35) from said first end terminal (10) on a negative outcome of the integrity check.

11. Communication system according to any preceding claim, wherein said security arrangement (30) is further configured to switch into encrypted transmission by transmitting real-time communication data (37) via an encryption unit (70) to a radio unit (62) in said second network (60).

12. Communication system according to any preceding claim, wherein said security arrangement (30) is configured to be run in the application layer of said first end terminal (10).

13. Method in a communication system comprising a first end terminal (10), a communication means (1), a media application (20) and a security arrangement (30), and wherein the security arrangement (30) is in the first end terminal (10), connected to a first network (40), for protecting against accidental breach of classified data to a second network (60), wherein the first network (40) represents a trusted network having a higher security classification level than the second network (60), the method comprising the steps of:
- receiving (S101), by the security arrangement (30), a request to transmit real-time communication data (35) to a second end terminal (61) in said second network (60);
- retrieving (S102), by the security arrangement (30), a security classification level for said second network (60);
if the second network (60) has a lower security classification level than said first network (40), wherein said first network (40) represents a trusted network, the method comprising the further steps of:
- establishing (S103), by the security arrangement (30), an inverse tunnel (100) from said first end terminal (10) to a trusted gateway (50) interconnecting said first network (40) and said second network (60), wherein said inverse tunnel (100) is protecting data that is outside of the tunnel (100) from breaching into the inverse tunnel (100), so as to protect classified data that is outside of the tunnel from leaking to the second network (60);
- receiving (S104), by the security arrangement (30), real-time source data (13) generated by the communication means (1);
- receiving (S105), by the security arrangement (30), media stream data (23) comprising header data and payload data generated by the media application (20), wherein real-time source data (12) received from the communication means (1) is used to generate said media stream data (23) in said media application (20);
- creating (S106), by the security arrangement (30), real-time communication data (35) by replacing the payload data in said media stream data (23) with said real-time source data (13), said real-time communication data (35) comprising header data from said media stream data (23) and payload data from said real-time source data (13);
- transmitting (S107), by the security arrangement (30), said real-time communication data (35) through said inverse tunnel (100).

14. Method according to claim 13, wherein the step of creating (S106) real-time communication data (35) is preceded by the steps of:
- performing a sanity check to verify the header of said media stream data (23) against a negotiated media description;
- if said media stream data (23) fails the sanity check, blocking said media stream data (23).

15. Computer readable storage medium comprising computer software which when run in a first end terminal (10) causes a security arrangement (30) in said first end terminal (10) to perform the method according to claims 13-14.

## Patentansprüche

1. Kommunikationssystem, umfassend ein erstes Endgerät (10), ein Kommunikationsmittel (1), eine Sicherheitsanordnung (30), eine Medienanwendung (20), und wobei die Sicherheitsanordnung (30) in dem ersten Endgerät (10) ist, das mit einem ersten Netzwerk (40) verbunden ist, zum Schutz gegen eine unbeabsichtigte Sicherheitsverletzung klassifizierter Daten gegenüber einem zweiten Netzwerk (60), wobei das erste Netzwerk (40) ein vertrauenswürdiges Netzwerk mit einer höheren Sicherheitsklassifizierungsstufe als das zweite Netzwerk (60) repräsentiert, wobei die Sicherheitsanordnung (30) zu Folgendem konfiguriert ist:
- Empfangen einer Anforderung zum Senden von Echtzeit-Kommunikationsdaten (35) an ein zweites Endgerät (61) in dem zweiten Netzwerk (60);
- Abrufen einer Sicherheitsklassifizierungsstufe für das zweite Netzwerk (60);
wobei, wenn das zweite Netzwerk (60) eine niedrigere Sicherheitsklassifizierungsstufe als das erste Netzwerk (40) aufweist, wobei das erste Netzwerk (40) ein vertrauenswürdiges Netzwerk repräsentiert, die Sicherheitsanordnung (30) des Weiteren zu Folgendem konfiguriert ist:
- Aufbauen eines umgekehrten Tunnels (100) von dem ersten Endgerät (10) zu einem vertrauenswürdigen Gateway (50), der das erste Netzwerk (40) und das zweite Netzwerk (60) miteinander verbindet, wobei der umgekehrte Tunnel (100) Daten, die sich außerhalb des Tunnels (100) befinden, davor schützt, in den umgekehrten Tunnel (100) einzubrechen, um klassifizierte Daten, die sich außerhalb des Tunnels befinden, davor zu schützen, in das zweite Netzwerk (60) zu gelangen;
- Empfangen von Echtzeit-Quelldaten (13), die von dem Kommunikationsmittel (1) erzeugt werden;
- Empfangen von Medienstromdaten (23), umfassend Headerdaten und Nutzlastdaten, die von der Medienanwendung (20) erzeugt werden, wobei die Echtzeit-Quelldaten, die von dem Kommunikationsmittel (1) empfangen werden, zum Erzeugen der Medienstromdaten (23) in der Medienanwendung (20) verwendet werden;
- Erzeugen von Echtzeit-Kommunikationsdaten (35) durch Ersetzen der Nutzlastdaten in den Medienstromdaten (23) durch die Echtzeit-Quelldaten (13), wobei die Echtzeit-Kommunikationsdaten (35) Headerdaten aus den Medienstromdaten (23) und Nutzlastdaten aus den Echtzeit-Quelldaten (13) umfassen;
- Senden der Echtzeit-Kommunikationsdaten (35) durch den umgekehrten Tunnel (100).

2. Kommunikationssystem nach Anspruch 1, wobei die Sicherheitsanordnung (30) des Weiteren zum Einschränken der Bandbreite der Medienstromdaten (23) auf eine ausgehandelte Datenrate konfiguriert ist.

3. Kommunikationssystem nach einem der Ansprüche 1 bis 2, wobei die Sicherheitsanordnung (30) des Weiteren zum Durchführen einer Integritätsprüfung konfiguriert ist, um den Header der Medienstromdaten (23) gegen eine ausgehandelte Medienbeschreibung zu überprüfen; und wenn die Medienstromdaten (43) die Integritätsprüfung nicht bestehen, Blockieren der Medienstromdaten (23).

4. Kommunikationssystem nach einem vorhergehenden Anspruch, wobei, wenn die Sicherheitsanordnung (30) eine Vielzahl von umgekehrten Tunnels (100, 100') aufgebaut hat, die Sicherheitsanordnung (30) des Weiteren dazu konfiguriert ist, zwischen der Vielzahl von umgekehrten Tunnels (100, 100') umzuschalten.

5. Kommunikationssystem nach einem vorhergehenden Anspruch, wobei, wenn die Sicherheitsanordnung (30) eine Vielzahl von umgekehrten Tunnels (100, 100') aufgebaut hat, die Sicherheitsanordnung (30) des Weiteren dazu konfiguriert ist, nur die Übertragung der Echtzeit-Kommunikationsdaten (35) in eine Sicherheitsklassifizierungsstufe auf einmal zuzulassen.

6. Kommunikationssystem nach einem vorhergehenden Anspruch, wobei die Sicherheitsanordnung (30) dazu konfiguriert ist, eingehende Echtzeit-Kommunikationsdaten (53) von mehreren Sicherheitsklassifikationsstufen gleichzeitig zuzulassen, ohne die Vertraulichkeit von eigenen und empfangenen klassifizierten Daten zu beeinträchtigen.

7. Kommunikationssystem nach einem vorhergehenden Anspruch, wobei die Echtzeit-Kommunikationsdaten (35) Audiodaten, Textdaten oder Videodaten sind.

8. Kommunikationssystem nach einem vorhergehenden Anspruch, wobei die Sicherheitsanordnung (30) des Weiteren zu Folgendem konfiguriert ist:
- Stummschalten des Empfangs von eingehenden Echtzeit-Kommunikationsdaten, die mit einer höheren Sicherheitsstufe klassifiziert sind, wenn das erste Endgerät (10) Echtzeit-Kommunikationsdaten (35) sendet, die mit einer niedrigeren Sicherheitsstufe klassifiziert sind.

9. Kommunikationssystem nach einem vorhergehenden Anspruch, wobei die Sicherheitsanordnung (30) des Weiteren zu Folgendem konfiguriert ist:
- Stummschalten der Übertragung von ausgehenden Echtzeit-Kommunikationsdaten (35), die mit einer niedrigeren Sicherheitsstufe klassifiziert sind, wenn das erste Endgerät (10) Echtzeit-Kommunikationsdaten empfängt, die mit einer höheren Sicherheitsstufe klassifiziert sind.

10. Kommunikationssystem nach einem vorhergehenden Anspruch, wobei die Sicherheitsanordnung (30) des Weiteren zu Folgendem konfiguriert ist:
- Durchführen einer Integritätsprüfung der Sicherheit der für die Sicherheitsanordnung (30) verwendeten Software;
- Deaktivieren aller Übertragungen der Echtzeit-Kommunikationsdaten (35) von dem ersten Endgerät (10) bei einem negativen Ergebnis der Integritätsprüfung.

11. Kommunikationssystem nach einem vorhergehenden Anspruch, wobei die Sicherheitsanordnung (30) des Weiteren dazu konfiguriert ist, in eine verschlüsselte Übertragung umzuschalten, durch Senden von Echtzeit-Kommunikationsdaten (37) über eine Verschlüsselungseinheit (70) an eine Funkeinheit (62) in dem zweiten Netzwerk (60).

12. Kommunikationssystem nach einem vorhergehenden Anspruch, wobei die Sicherheitsanordnung (30) dazu konfiguriert ist, in der Anwendungsschicht des ersten Endgeräts (10) ausgeführt zu werden.

13. Verfahren in einem Kommunikationssystem, umfassend ein erstes Endgerät (10), ein Kommunikationsmittel (1), eine Medienanwendung (20) und eine Sicherheitsanordnung (30), und wobei die Sicherheitsanordnung (30) in dem ersten Endgerät (10) ist, das mit einem ersten Netzwerk (40) verbunden ist, zum Schutz gegen eine unbeabsichtigte Sicherheitsverletzung klassifizierter Daten gegenüber einem zweiten Netzwerk (60), wobei das erste Netzwerk (40) ein vertrauenswürdiges Netzwerk mit einer höheren Sicherheitsklassifizierungsstufe als das zweite Netzwerk (60) repräsentiert, wobei das Verfahren folgende Schritte umfasst:
- Empfangen (S101), durch die Sicherheitsanordnung (30), einer Anforderung zum Senden von Echtzeit-Kommunikationsdaten (35) an ein zweites Endgerät (61) in dem zweiten Netzwerk (60);
- Abrufen (S102), durch die Sicherheitsanordnung (30), einer Sicherheitsklassifizierungsstufe für das zweite Netzwerk (60);
wobei, wenn das zweite Netzwerk (60) eine niedrigere Sicherheitsklassifizierungsstufe als das erste Netzwerk (40) aufweist, wobei das erste Netzwerk (40) ein vertrauenswürdiges Netzwerk repräsentiert, das Verfahren folgende weitere Schritte umfasst:
- Aufbauen (S103), durch die Sicherheitsanordnung (30), eines umgekehrten Tunnels (100) von dem ersten Endgerät (10) zu einem vertrauenswürdigen Gateway (50), der das erste Netzwerk (40) und das zweite Netzwerk (60) miteinander verbindet, wobei der umgekehrte Tunnel (100) Daten, die sich außerhalb des Tunnels (100) befinden, davor schützt, in den umgekehrten Tunnel (100) einzubrechen, um klassifizierte Daten, die sich außerhalb des Tunnels befinden, davor zu schützen, in das zweite Netzwerk (60) zu gelangen;
- Empfangen (S104), durch die Sicherheitsanordnung (30), von Echtzeit-Quelldaten (13), die von dem Kommunikationsmittel (1) erzeugt werden;
- Empfangen (S105), durch die Sicherheitsanordnung (30), von Medienstromdaten (23), umfassend Headerdaten und Nutzlastdaten, die von der Medienanwendung (20) erzeugt werden, wobei die Echtzeit-Quelldaten (12), die von dem Kommunikationsmittel (1) empfangen werden, zum Erzeugen der Medienstromdaten (23) in der Medienanwendung (20) verwendet werden;
- Erzeugen (S106), durch die Sicherheitsanordnung (30), von Echtzeit-Kommunikationsdaten (35) durch Ersetzen der Nutzlastdaten in den Medienstromdaten (23) durch die Echtzeit-Quelldaten (13), wobei die Echtzeit-Kommunikationsdaten (35) Headerdaten aus den Medienstromdaten (23) und Nutzlastdaten aus den Echtzeit-Quelldaten (13) umfassen;
- Senden (S107), durch die Sicherheitsanordnung (30), von Echtzeit-Kommunikationsdaten (35) durch den umgekehrten Tunnel (100).

14. Verfahren nach Anspruch 13, wobei dem Schritt zum Erzeugen (S106) von Echtzeit-Kommunikationsdaten (35) folgende Schritte vorausgehen:
- Durchführen einer Integritätsprüfung zum Überprüfen des Headers der Medienstromdaten (23) gegen eine ausgehandelte Medienbeschreibung;
- wenn die Medienstromdaten (23) die Integritätsprüfung nicht bestehen, Blockieren der Medienstromdaten (23).

15. Computerlesbares Speichermedium, umfassend Computersoftware, die bei Ausführung in einem ersten Endgerät (10) eine Sicherheitsanordnung (30) in dem ersten Endgerät (10) zur Durchführung des Verfahrens nach den Ansprüchen 13 bis 14 veranlasst.

## Revendications

1. Système de communication comprenant un premier terminal d'extrémité (10), un moyen de communication (1), un agencement de sécurité (30), une application de média (20) et dans lequel l'agencement de sécurité (30) se trouve dans le premier terminal d'extrémité (10), connecté à un premier réseau (40), pour protéger contre une violation accidentelle de données classifiées vers un second réseau (60), où le premier réseau (40) représente un réseau de confiance ayant un niveau de classification de sécurité supérieur à celui du second réseau (60), ledit agencement de sécurité (30) est configuré pour :
- recevoir une requête pour transmettre des données de communication en temps réel (35) à un second terminal d'extrémité (61) dans ledit second réseau (60) ;
- récupérer un niveau de classification de sécurité pour ledit second réseau (60) ;
si ledit second réseau (60) a un niveau de classification de sécurité inférieur à celui dudit premier réseau (40), où le premier réseau (40) représente un réseau de confiance, ledit agencement de sécurité (30) est en outre configuré pour :
- établir un tunnel inverse (100) dudit premier terminal d'extrémité (10) à une passerelle de confiance (50) interconnectant ledit premier réseau (40) et ledit second réseau (60), où ledit tunnel inverse (100) protège des données qui sont en dehors du tunnel (100) d'ouvrir une brèche dans le tunnel inverse (100), afin de protéger des données classifiées qui sont en dehors du tunnel de fuiter vers le second réseau (60) ;
- recevoir des données source en temps réel (13) générées par le moyen de communication (1) ;
- recevoir des données de flux de média (23) comprenant des données d'en-tête et des données de charge utile générées par l'application de média (20), où des données source en temps réel (12) reçues du moyen de communication (1) sont utilisées pour générer lesdites données de flux de média (23) dans ladite application de média (20) ;
- créer des données de communication en temps réel (35) en remplaçant les données de charge utile dans lesdites données de flux de média (23) par lesdites données source en temps réel (13), lesdites données de communication en temps réel (35) comprenant des données d'en-tête provenant desdites données de flux de média (23) et des données de charge utile provenant desdites données source en temps réel (13) ;
- transmettre lesdites données de communication en temps réel (35) à travers ledit tunnel inverse (100).

2. Système de communication selon la revendication 1, dans lequel ledit agencement de sécurité (30) est en outre configuré pour limiter la largeur de bande desdites données de flux de média (23) à un débit de données négocié.

3. Système de communication selon l'une quelconque des revendications 1 et 2, dans lequel ledit agencement de sécurité (30) est en outre configuré pour effectuer un contrôle d'intégrité afin de vérifier l'en-tête desdites données de flux de média (23) par rapport à une description de média négociée ; et si lesdites données de flux de média (23) échouent au contrôle d'intégrité, bloquer lesdites données de flux de média (23).

4. Système de communication selon l'une quelconque des revendications précédentes, dans lequel si ledit agencement de sécurité (30) a établi une pluralité de tunnels inverses (100, 100'), ledit agencement de sécurité (30) est en outre configuré pour basculer entre ladite pluralité de tunnels inverses (100, 100').

5. Système de communication selon l'une quelconque des revendications précédentes, dans lequel si ledit agencement de sécurité (30) a établi une pluralité de tunnels inverses (100, 100'), ledit agencement de sécurité (30) est en outre configuré pour permettre uniquement la transmission desdites données de communication en temps réel (35) dans un niveau de classification de sécurité à la fois.

6. Système de communication selon l'une quelconque des revendications précédentes, dans lequel ledit agencement de sécurité (30) est configuré pour permettre des données de communication en temps réel entrantes (53) provenant de plusieurs niveaux de classification de sécurité simultanément sans compromettre la confidentialité de données classifiées propres et reçues.

7. Système de communication selon l'une quelconque des revendications précédentes, dans lequel lesdites données de communication en temps réel (35) sont des données audio, des données texte ou des données vidéo.

8. Système de communication selon l'une quelconque des revendications précédentes, dans lequel ledit agencement de sécurité (30) est en outre configuré pour :
- mettre en silence la réception de données de communication en temps réel classifiées de niveau de sécurité supérieur entrantes lorsque ledit premier terminal d'extrémité (10) transmet des données de communication en temps réel classifiées de niveau de sécurité inférieur (35).

9. Système de communication selon l'une quelconque des revendications précédentes, dans lequel ledit agencement de sécurité (30) est en outre configuré pour :
- mettre en silence la transmission de données de communication en temps réel classifiées de niveau de sécurité inférieur sortantes (35) lorsque ledit premier terminal d'extrémité (10) reçoit des données de communication en temps réel classifiées de niveau de sécurité supérieur.

10. Système de communication selon l'une quelconque des revendications précédentes, dans lequel ledit agencement de sécurité (30) est en outre configuré pour :
- effectuer un contrôle d'intégrité de la sécurité d'un logiciel utilisé pour ledit agencement de sécurité (30) ;
- désactiver toute transmission desdites données de communication en temps réel (35) depuis ledit premier terminal d'extrémité (10) sur un résultat négatif du contrôle d'intégrité.

11. Système de communication selon l'une quelconque des revendications précédentes, dans lequel ledit agencement de sécurité (30) est en outre configuré pour basculer dans une transmission chiffrée en transmettant des données de communication en temps réel (37) via une unité de chiffrement (70) à une unité radio (62) dans ledit second réseau (60).

12. Système de communication selon l'une quelconque des revendications précédentes, dans lequel ledit agencement de sécurité (30) est configuré pour être exécuté dans la couche d'application dudit premier terminal d'extrémité (10).

13. Procédé dans un système de communication comprenant un premier terminal d'extrémité (10), un moyen de communication (1), une application de média (20) et un agencement de sécurité (30), et dans lequel l'agencement de sécurité (30) se trouve dans le premier terminal d'extrémité (10), connecté à un premier réseau (40), pour protéger contre une violation accidentelle de données classifiées vers un second réseau (60), où le premier réseau (40) représente un réseau de confiance ayant un niveau de classification de sécurité supérieur à celui du second réseau (60), le procédé comprenant les étapes suivantes :
- recevoir (S101), par l'agencement de sécurité (30), une requête pour transmettre des données de communication en temps réel (35) à un second terminal d'extrémité (61) dans ledit second réseau (60) ;
- récupérer (S102), par l'agencement de sécurité (30), un niveau de classification de sécurité pour ledit second réseau (60) ;
si ledit second réseau (60) a un niveau de classification de sécurité inférieur à celui dudit premier réseau (40), où le premier réseau (40) représente un réseau de confiance, le procédé comprenant les étapes supplémentaires suivantes :
- établir (S103), par l'agencement de sécurité (30), un tunnel inverse (100) dudit premier terminal d'extrémité (10) à une passerelle de confiance (50) interconnectant ledit premier réseau (40) et ledit second réseau (60), où ledit tunnel inverse (100) protège des données qui sont en dehors du tunnel (100) d'ouvrir une brèche dans le tunnel inverse (100), afin de protéger des données classifiées qui sont en dehors du tunnel de fuiter vers le second réseau (60) ;
- recevoir (S104), par l'agencement de sécurité (30), des données source en temps réel (13) générées par le moyen de communication (1) ;
- recevoir (S105), par l'agencement de sécurité (30), des données de flux de média (23) comprenant des données d'en-tête et des données de charge utile générées par l'application de média (20), où des données source en temps réel (12) reçues du moyen de communication (1) sont utilisées pour générer lesdites données de flux de média (23) dans ladite application de média (20) ;
- créer (S106), par l'agencement de sécurité (30), des données de communication en temps réel (35) en remplaçant les données de charge utile dans lesdites données de flux de média (23) par lesdites données source en temps réel (13), lesdites données de communication en temps réel (35) comprenant des données d'en-tête provenant desdites données de flux de média (23) et des données de charge utile provenant desdites données source en temps réel (13) ;
- transmettre (S107), par l'agencement de sécurité (30), lesdites données de communication en temps réel (35) à travers ledit tunnel inverse (100).

14. Procédé selon la revendication 13, dans lequel l'étape de création (S106) de données de communication en temps réel (35) est précédée des étapes consistant à :
- effectuer un contrôle d'intégrité pour vérifier l'en-tête desdites données de flux de média (23) par rapport à une description de média négociée ;
- si lesdites données de flux multimédia (23) échouent au contrôle d'intégrité, bloquer lesdites données de flux de média (23).

15. Support de stockage lisible par ordinateur comprenant un logiciel informatique qui, lorsqu'il est exécuté dans un premier terminal d'extrémité (10), amène un agencement de sécurité (30) dans ledit premier terminal d'extrémité (10) à mettre en œuvre le procédé selon les revendications 13 et 14.
